# EUROPEAN PATENT SPECIFICATION

(11) **EP 2 351 659 B1**
(45) Date of publication and mention of the grant of the patent: **12.12.2012**
(21) Application number: 10152034.4
(22) Date of filing: 29.01.2010
(51) Int. Cl.: B60H 1/00, B60R 7/04

(54) **Centre Console Arrangement**
Mittelkonsolenanordnung
Agencement de console centrale

(43) Date of publication of application: 03.08.2011
(73) Proprietor: Volvo Car Corporation, 405 31 Göteborg (SE)
(72) Inventor: Lorentsson, John, 44294, Ytterby (SE)
(74) Representative: Widahl, Jenny Marie

(56) References cited:
- EP-A1- 1 595 747
- DE-A1- 10 335 000
- GB-A- 2 338 459
- JP-A- 61 064 552
- JP-A- 2006 182 098

## Description

### TECHNICAL AREA

The present invention relates to a centre console arrangement in a vehicle, said arrangement comprises at least one duct for air distribution and a structural part for taking up forces.

### TECHNICAL BACKGROUND

There exist several ways to provide conditioned air to the passengers located in the rear seats in a vehicle. One of the known ways is to provide air distribution to a centre floor console being located between the front seats and front seat backs. Then at least one space requiring air duct runs separately along the centre tunnel, often next to a space requiring centre console structural part for taking up forces.

It is a problem to accommodate both the space requiring air duct(s) and the structural part for taking up forces and at the same time provide a centre console with an accommodation space for gear shift modules, accommodation boxes, arm rests, cup holders, etc. In the car manufacturing industry, the air ducts and the structural part for taking up forces are often designed at separate construction departments, while still another department manages the packing of said air ducts and structural part together with the gear shift modules, arms rests, accommodation space boxes and cup holders.

The mentioned structural part takes up forces from the passengers leaning onto the centre console, arm rest forces and forces from the handling of gear shift modules, i.e. forces when operating the different cup holders, boxes and arrangements provided in connection with the centre console. But the structural part of the centre console arrangement may also be an upper part of a side impact protection system to protect vehicle occupants in rear end and side impacts.

One example of a centre console arrangement being located onto an centre tunnel in a vehicle is provided in US 5,897,155 wherein the structural part is constituted of a plurality of vertically spaced hollow beam cross braces extending between the opposite lateral sides of the centre console, serving to transfer lateral impact forces on the vehicle between the respective seat backs. However, these vertically spaced hollow beam cross braces are space-requiring, expensive, and not the least, weight a lot.

Document GB 2 338 459A defining the preamble of claim 1 discloses a tunnel panelling arrangement for a motor vehicle, which has a supporting structure in which at least one receiving space is provided, and which has at least one approximately vertically aligned longitudinal wall. The supporting structure, which is of integral construction, has mounted on it at least one side wall element which is assigned to the longitudinal wall of the supporting structure and, together with the side wall, at least in some regions bounds one or more cavities, which are used as air supply ducts for the receiving space.

Document EP 1 595 747 A1 discloses a centre console for a motor vehicle having an inner section extending in the longitudinal direction, and at least one side element, which can be fitted on the inner section. The inner section comprises two elements extending in the centre console's longitudinal direction and interconnected along a connecting face, which also extends in the centre console's longitudinal direction. The connecting face, at least in sections, extends orthogonally to the transverse direction of the centre console.

### SUMMARY OF THE INVENTION

It is therefore an object of the present invention to provide an arrangement for air distribution to a rear seat in a vehicle comprising at least one air duct, said arrangement will provide more package and accommodation spaces for gear shift modules, accommodation space boxes, arm rests, cup holders, etc, than the existing centre console arrangements in vehicles.

It is also an object to provide a centre console arrangement comprising a structural part, which can take up forces from the passengers, when leaning onto the centre console, arm rest forces and forces from the gear shift modules, etc.

It is also an object to provide a structural part of the vehicle console arrangement which takes up forces in vehicles having an existing upper part of a side impact protection system.

It is a further object to provide a centre console arrangement, which weight is less than the existing centre console arrangements in vehicles. At the same time, it is a further object to provide a centre console arrangement which is more inexpensive to manufacture than the existing centre console arrangements.

These objects are achieved in accordance with the present invention by means of a centre console arrangement in a vehicle as claimed in claim 1.

By means of the inventive centre console arrangement, the air ducts and the structural part for taking up forces are designed by the same department at the same time as the packing of the gear shift modules, arms rests, accommodation space boxes and cup holders take place into the center console arrangement. In this way, valuable space and weight are saved. Thus, it is avoided that the air duct(s), the structural part, and the gear shift modules, arms rests, accommodation space boxes and cup holders are designed by separate departments and thereafter packed into the centre console arrangement by still another department according to general way to work in the car manufacturing industry.

According to the invention, at least one duct for air distribution is integrated in a structural part for taking up forces. However, two or more air ducts may be integrated in the structural part for taking up forces in other embodiments of the invention.

In this context, a structural part is the part intended for taking up forces in rear and side impacts, e.g. as a part of a side impact protection system, but also forces from the driver or passenger, when shifting gears, when opening and closing boxes and for instance when leaning onto the centre console arrangement.

Preferably, with "integrated" means that the at least one air duct is preferably integrated in the geometry of the structural part for taking up forces. In greater detail, the geometry of the duct(s) for air distribution is integrated in the geometry of the structural part for taking up forces. In even greater detail, the geometry of the inside of the air ducts (wherein the air flows) is also a part of the geometry of the structural part. In opposite thereto, the outside or the air ducts may be designed in any way, which aims to provide a strong and solid structural part for taking up forces, which also may be possible to pack into the center console arrangement in a vehicle. However, it is also possible to claim that the geometry of the structural part is integrated in the geometry for air distribution in the opposite way.

In conclusion, the duct(s) of the air distribution is a part of the structural part for taking up forces. In the opposite way, the structural part for taking up forces comprises the air duct(s) for the air distribution of the vehicle. Thus, the structural part also comprises further parts designed for taking up forces, which do not constitute the actual air ducts for air distribution of the HVAC of a vehicle. Advantageously, as already mentioned above, this inventive idea, that the geometry of the air distribution is integrated in the geometry of the structural part, is space and weight saving.

Preferably, the structural part is composed of at least of a first and a second part provided with two half-tubular separate cavities, extending along the extension length of the first and the second parts. Thus, said first and second parts are arranged to be composed to the structural part. (The described first and the second part are not to be mixed up with "a part constituting the air distribution" and "a structural part taking up forces" as described above.) Alternatively, the structural part may be composed of three or more physical parts arranged to be composed to a number of air ducts.

In a second embodiment, one of the first and the second parts comprises a larger cavity and the other comprises a smaller cavity. Further, in a third embodiment, one of the first and the second parts comprises a tubular cavity itself and the other comprises no cavity at all. In still another embodiment, several parts together form the duct(s) for air distribution.

More preferably, the first part and the second part are put to together to the structural part so that preferably two tubular air ducts are created by the half -tubular cavities of the structural part, which air ducts extend along the extension length of the structural part. However, another number of air ducts may be created in the structural part, e.g. one, three, four or more air ducts.

The separate first and second parts may be manufactured of a polymeric material such as a thermoplastic material in an injection moulding process. Alternatively, the first and second parts may be manufactured by die casting from any material suited for the purpose.

The first and the second parts are attached to each other by welding, preferably by ultrasonically welding. Alternatively, other ways to attach the first and second parts may be by vibration welding, friction welding and by gluing.

The cross section of the air ducts is preferably rectangular. More preferably, the cross section of the air ducts vary along the extension length of the structural part, since it may be desirable to adjust the cross section of the air duct(s) with respect to the available package space next to the center tunnel and into the center console (with respect to gear shift modules, armrests, accommodation spaces, cup holders and other arrangements packed inside the center console). Thus, the air ducts are preferably adjusted to the package prerequisites along the centre console and the centre console tunnel, etc. So the cross-section may be varied in size and in form such as circular, oval and quadrangular as well.

However, in an air distribution perspective it is advantageous with as constant cross section of the air duct(s) as possible along the extension length of the structural part, and as less air duct bends as possible.

The air duct run from the HVAC to at least one air outlet or air vent for the rear seat row. The at least one air vent is preferably located in a centre floor module, being located between the front seat backs.

When the first and the second parts are composed to the structural part and thereafter mounted in a vehicle, the first part is then located in an upper position in relation to the rest of the structural part. In greater detail, an upper indented accommodation space is preferably formed between the two protruding tubular air ducts of the upper surface of the first part of the structural part. The center console comprising gear shift modules, accommodation boxes, arm rests, cup holders and fascia panels thereof are then arranged into said upper accommodation space.

In the same way, the second part is located in a lower position (with relation to the rest of the structural part) when the complete structural part is mounted in the vehicle. In greater detail, a lower indented accommodation space is preferably formed between the two protruding air ducts of the lower surface of the second part of the structural part. Advantageously, the lower accommodation space of the structural part lies in contact with the centre tunnel.

In the mounted position thereof, the structural part is provided with lower attachment points for attachment into the instrument panel, centre tunnel and/or body in white. Preferably, the structural part may in front be attached to the instrument panel or centre tunnel. In the same way, the structural part may be attached to the centre tunnel or body-in-white in the rear.

In the same way, the structural part is provided with a number of upper attachment points for attachment to the centre console. In greater detail, it may exist e.g. six attachment points, in which for instance the fascia panels of the center stack, center console, the gear shift module, the accommodation space box(es), the cup holders, etc may be attached. The attachment is preferably carried out by screwing, but may be carried out by rivets or clinching.

### BRIEF DESCRIPTION OF THE DRAWINGS

The invention will be described in the following by way of example only and with reference to the embodiments illustrated in the drawings, in which
- Fig. 1: shows a perspective view of the complete center console arrangement,
- Fig. 2: shows a perspective view of a first and a second part of the structural part, and
- Fig. 3: shows a perspective view of the structural part.

### DETAILED DESCRIPTION OF PREFERRED EMBODIMENTS

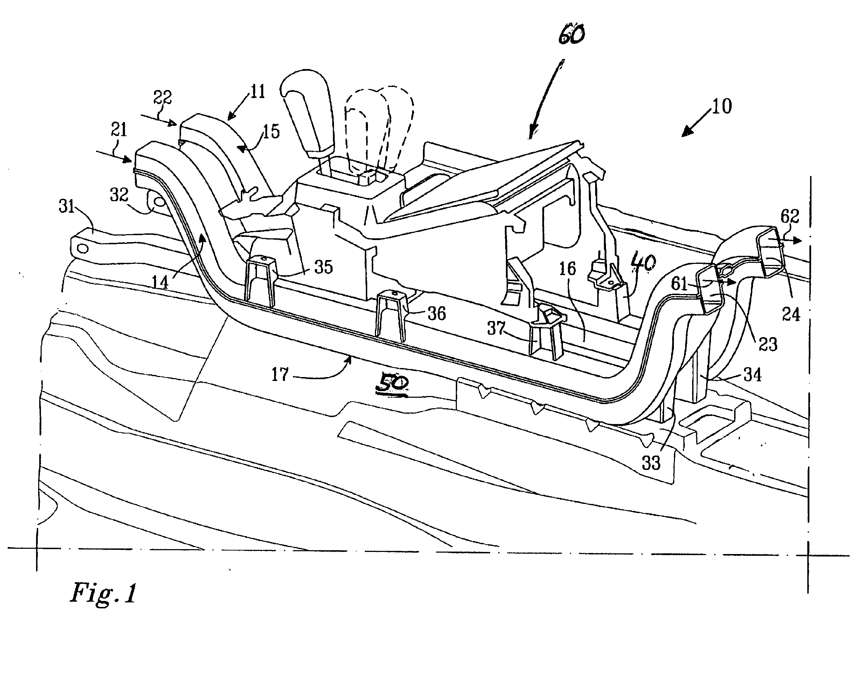

In the drawings and in the following description, the center console 60 comprises gear shift modules, arm rests, accommodation boxes and cup holders and fascia panels thereof, see Fig. 1. The center console arrangement 10 comprises said center console 60 and the inventive structural part 11.

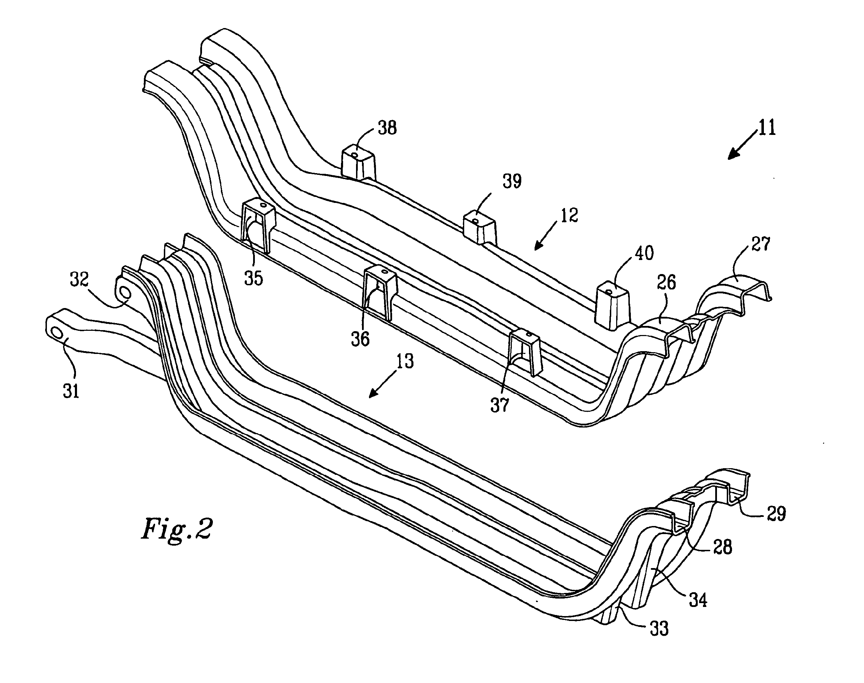

In a first preferred embodiment of the invention, the center console arrangement 10 comprises a first 12 and a second part 13, which may be seen in Fig. 2. The first 12 and the second part 13 each preferably comprises two separate half-tubular cavities 26, 27 and 28, 29, respectively, which extend along the extension length of the first 12 and the second parts 13.

Both the first 12 and the second 13 part comprises attachment points 35, 36, 37, 38, 39, 40 and 31, 32, 33 and 34, respectively, for attachment to the vehicle, which will be described in greater detail below.

By the way, the first and the second parts 12 and 13 of the structural part 11 are injection molded in a polymeric material such as a thermoplastic material.

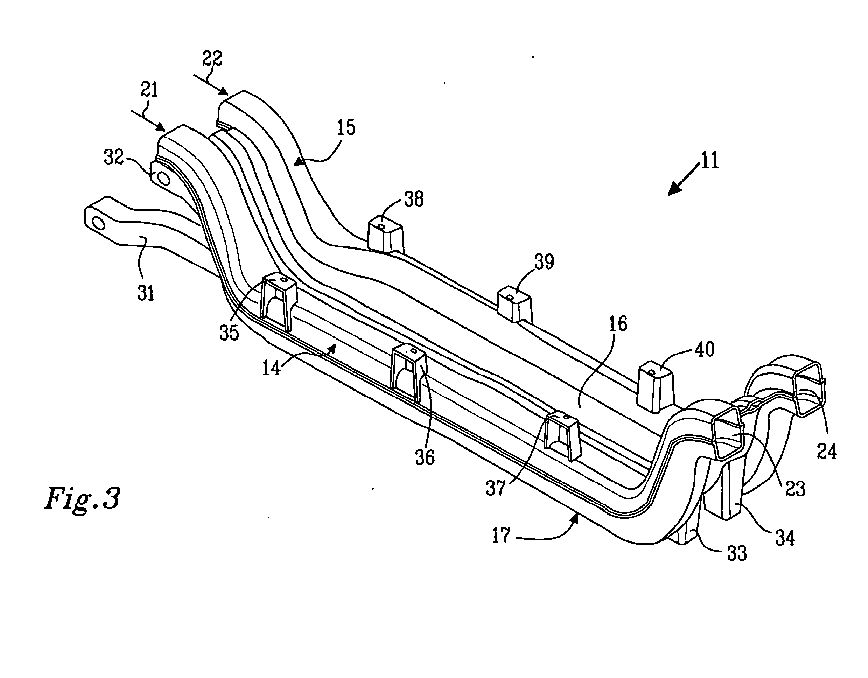

In the first preferred embodiment of the invention, the first and the second part 12 and 13 are then composed to a structural part 11, which may be seen in Fig. 3, so that a first and a second closed duct 14 and 15 are created by closing the half-tubular cavities 26, 27 and 28, 29, respectively, of the structural part 11 in Fig. 2. The first and second ducts 14 and 15 then extend along the extension length of the structural part 11. The first and the second parts 12 and 13 are attached to each other by welding, preferably by ultrasonically welding.

As particularly can be seen in Fig. 3, when the structural part 11 is in the mounted position thereof, see Figs 1 and 3, an indented upper accommodation space 16 is created between the separate protruding first and second air ducts 14 and 15 on the upper surface of the structural part 11 in the mounted position thereof. In the same way, an indented lower accommodation space 17 is created between the two separate protruding air ducts 14 and 15 on the lower surface of the structural part 11 in mounted position thereof.

When mounted in a vehicle, the lower accommodation space 17 of the structural part 11 rests onto the center tunnel 50 of the vehicle, see Fig. 1, so that the lower accommodation space 17 (marked with arrow in Fig. 3) and the centre tunnel 50 lies in contact with each other, see Fig 1.

With reference to Fig.1, the structural part 11 is in at least one front lower point 31, 32 attached into the vehicle (seen in the longitudinal direction of the vehicle), e.g. into the instrument panel structure, center tunnel or body in white, see Fig 1. In the same way, the structural part 11 are preferably in at least one rear lower point, here a first and a second rear lower point 33 and 34 , attached into the centre tunnel 50 or the body in white. The attachments are preferably performed by screwing.

Finally, with reference to both Fig. 1 and 3, due to partly hidden details, the center console 60 is attached onto the upper accommodation space 16 of the structural part 11 of the vehicle. The arrangements or the upper fascia panels of the gear shift modules, arms rests, accommodation space boxes and cup holders are attached to a number of fixation points 35, 36, 35, 37, 38, 39 and 40 of the structural part 11. Then the attachments are preferably performed by screwing but may also be performed by rivets, clinching in the same way as described above.

Thus, as may be seen in Fig. 1, the center console 60 generally comprises fascia panels, gear shift modules, accommodation boxes, arm rests, cup holders, etcetera as mentioned above compared to the inventive center console arrangement 10 comprising the center console 60 itself and the inventive structural part 11.

In the preferred embodiment of the invention, the air ducts 14 and 15 run from the outlet(s) of the HVAC of the vehicle at the positions 21 and 22 to the air vents or outlets 23 and 24 located in connection to a rear seat row in the mounted position thereof, see Figs 1 and 3. Preferably, the air vents are located in the center floor console between the front seat backs, which is arranged to be directed towards passengers seated in a rear seat row.

In greater detail, the cross-section of the created air ducts 14 and 15 is preferably rectangular due to package and available space prerequisites along the length of the center tunnel 50, see Fig. 3.

More preferably, the cross section of the air ducts 14 and 15 is varied along the extension length of the ducts 14 and 15 since it may be desirable to adjust the cross section of the air duct(s) 14 and 15 with respect to the available package space next to the center tunnel 50 and into the center console arrangement 10 with regard to gear shift modules, armrests, accommodation spaces, cup holders and other arrangements inside the center console 60 or center stack.

Thus, the center console arrangement 10 provides a structural part 11, the geometry of which constitutes ducts 14 and 15 for air distribution from the HVAC to the rear seat row of a vehicle. In particular, a part of the geometry of the structural part 11 constitutes the geometry of the inside of the air ducts 14 and 15 (wherein the air flows). In this way, the air ducts 14, 15 constitute a part of the structural part 11 for taking up forces from the passengers leaning onto the centre console 60, arm rest forces and forces from the handling of gear shift modules, but the structural part 11 of the centre console arrangement 10 may also be an upper part of a side impact protection system to protect vehicle occupants in rear end and side impacts. In this context, "structural part" 11 means a structural part provided with a high structural strength intended for taking up forces in both rear end and side impacts. Obviously, the structural part 11 comprises parts not being a part of the air ducts 14 and 15.

The invention has been described above and illustrated in the drawings by way of example only and the skilled person will recognize that various modifications may be made without departing from the scope of the invention as defined by the appended claims.

## Claims

1. Centre console arrangement (10) in a vehicle, the arrangement (10) comprises at least one duct (14. 15) for air distribution and a structural part (11) for taking up forces, wherein
said at least one air duct (14, 15) is integrated in the geometry of the structural part (11) for taking up forces,
wherein, the structural part (11) is composed of at least a first part (12) and a second part (13), whereof at least one is provided with a cavity (26, 27, 28, 29) extending along the extension length of said at least one first (12) and/or second part (13),
**characterised in that**
the first part (12) is locatted in an upper position in relation to the rest of the structural part (11), and the second part (13) is located in a lower position with relation to the rest of the structural part (11) when the complete structural part (11) is mounted in the vehicle.

2. Centre console arrangement (10) as claimed in claim 1
**characterised in that** the first part (12) and the second part (13) are put together so that at least one air duct (14, 15) is created in the structural part (11), which air duct (14, 15) extends along the extension length of the structural part (11).

3. Centre console arrangement (10) as claimed in claim 2, **characterised in that** one, two, three, four or more tubular air ducts (14, 15) are created by half-tubular cavities (26, 27. 28. 29) of the structural part (11) when put together.

4. Centre console arrangement (10) as claimed in claim 3,
**characterised in that** one air duct (14, 15) is created at each longitudinal side of the centre console arrangement (10),

5. Centre console arrangement (10) as claimed in any one of claims 2-4-**characterised in that** the first part (12) and the second part (13) are provided with two half-tubular separate cavities (26, 27, 28, 29), extending along the extension lenght of the first (12) and the second part (13), the first and second parts being arranged to be composed to the structural part (11) so that a first (14) and a second (15) closed air duct are created by closing the half-tubular cavities (26, 27, 28, 29).

6. Centre console arrangement (10) as claimed in any of the preceding claims, **characterised in that** the cross section of the at least one air duct (14, 15) is rectangular.

7. Centre console arrangement (10) as claimed in any of the preceding claims, **characterised in that** the cross section of the air duct (14, 15) vary along the extension length of the structural part (11).

8. Centre console arrangement (10) as claimed in any of the preceding claims, **characterised in that** the air duct (14, 15) runs from the HVAC to at least one air outlet or air vent (61, 62) for the rear seat row.

9. centre console arrangement (10) as claimed in any of the preceding claims, **characterised in that** an uppper accommodation space (16) is formed between the two air ducts (14, 15) on the upper surface of the structural part (11) in the mounted position thereof,
the centre console arrangement (10) further comprising a centre console (60), arranged into the upper accommodation space (16).

10. Centre console arrangement (10) as claimed in claim 9.
**characterised in that**
the centre console comprises fascia panels, gear shift modules, accommodation boxes, arm rests, cup holders, etcetera.

11. Centre console arrangement (101 as claimed in any one of the preceding claims, **characterised in that** an indented lower accommodation space (17) is created between the air ducts (14, 15) on the lower surface of the structural part (11) in mounted po"ition thereof the lower accommodation space (17) being adapted to rest onto a centre tunnel (50) of the vehicle.

12. Centre console arrangement (10) as claimed in any of the preceding claims, **characterised in that** the structural part (11) is provided with lower attachment points (31, 32, 33, 34) for attachment into the instrument panel, centre tunnel and/or body in white.

13. Centre console arrangement (10) as claimed in any of the preceding claims, **characterised in that** the structural part (11) is provided with upper attachment points (35, 36, 37, 38, 39, 40) for attachment to the centre console (60).

14. Centre console arrangement (10) as claimed in any of the preceding claims, **characterised in that** the structural part (11) is manufactured of a thermoplastic material.

## Patentansprüche

1. Mittelkonsolenanordnung (10) in einem Fahrzeug, wobei die Anordnung (10) wenigstens einen Kanal (14, 15) für die Luftverteilung und ein Konstruktionsteil (11) zum Aufnehmen von Kräften umfasst, wobei der wenigstens eine Luftkanal (14, 15) in die Geometrie des Konstruktionsteils (11) zum Aufnehmen von Kräften integriert ist,
wobei das Konstruktionsteil (11) wenigstens aus einem ersten Teil (12) und aus einem zweiten Teil (13) besteht, von denen wenigstens eines mit einem Hohlraum (26, 27, 28, 29) versehen ist, der entlang der Verlaufslänge des wenigstens einen des ersten (12) und/oder des zweiten Teils (13) verläuft,
**dadurch gekennzeichnet, dass**
sich das erste Teil (12) in Bezug auf den Rest des Konstruktionsteils (11) in einer oberen Lage befindet und das zweite Teil (13) in Bezug auf den Rest des Konstruktionsteils (11) in einer unteren Lage befindet, wenn das fertige Konstruktionsteil (11) in das Fahrzeug eingebaut ist.

2. Mittelkonsolenanordnung (10) nach Anspruch 1,
**dadurch gekennzeichnet, dass** das erste Teil (12) und das zweite Teil (13) in der Weise zusammengesetzt sind, dass in dem Konstruktionsteil (11) wenigstens ein Luftkanal (14, 15) erzeugt ist, wobei der Luftkanal (14, 15) entlang der Verlaufslänge des Konstruktionsteils (11) verläuft.

3. Mittelkonsolenanordnung (10) nach Anspruch 2,
**dadurch gekennzeichnet, dass** durch halbröhrenförmige Hohlräume (26, 27, 28, 29) des Konstruktionsteils (11) ein röhrenförmiger Luftkanal (14, 15) oder zwei drei, vier oder mehr röhrenförmige Luftkanäle (14, 15) erzeugt sind, wenn sie zusammengesetzt sind.

4. Mittelkonsolenanordnung (10) nach Anspruch 3,
**dadurch gekennzeichnet, dass** bei jeder Längsseite der Mittelkonsolenanordnung (10) ein Luftkanal (14, 15) erzeugt ist.

5. Mittelkonsolenanordnung (10) nach einem der Ansprüche 2-4,
**dadurch gekennzeichnet, dass** das erste Teil (12) und das zweite Teil (13) mit zwei halbröhrenförmigen getrennten Hohlräumen (26, 27, 28, 29) versehen sind, die entlang der Verlaufslänge des ersten (12) und des zweiten Teils (13) verlaufen, wobei das erste und das zweite Teil so angeordnet sind, dass sie zu dem Konstruktionsteil (11) zusammengesetzt sind, so dass durch Schließen der halbröhrenförmigen Hohlräume (26, 27, 28, 29) ein erster (14) und ein zweiter (15) geschlossener Luftkanal erzeugt sind.

6. Mittelkonsolenanordnung (10) nach einem der vorhergehenden Ansprüche,
**dadurch gekennzeichnet, dass** der Querschnitt des wenigstens einen Luftkanals (14, 15) rechteckig ist.

7. Mittelkonsolenanordnung (10) nach einem der vorhergehenden Ansprüche,
**dadurch gekennzeichnet, dass** der Querschnitt des Luftkanals (14, 15) entlang der Verlaufslänge des Konstruktionsteils (11) variiert.

8. Mittelkonsolenanordnung (10) nach einem der vorhergehenden Ansprüche,
**dadurch gekennzeichnet, dass** der Luftkanal (14, 15) von der HVAC zu wenigstens einem Luftauslass oder zu einer Entlüftungsöffnung (61, 62) für die hintere Sitzreihe verläuft.

9. Mittelkonsolenanordnung (10) nach einem der vorhergehenden Ansprüche,
**dadurch gekennzeichnet, dass** zwischen den zwei Luftkanälen (14, 15) an der oberen Oberfläche des Konstruktionsteils (11) in seiner eingebauten Lage ein oberer Aufnahmeraum (16) gebildet ist,
wobei die Mittelkonsolenanordnung (10) ferner eine Mittelkonsole (60) umfasst, die in dem oberen Aufnahmeraum (16) angeordnet ist.

10. Mittelkonsolenanordnung (10) nach Anspruch 9, **dadurch gekennzeichnet, dass**
die Mittelkonsole Armaturenbretter, Gangschaltungsmodule, Aufnahmekästen, Armstützen, Tassenhalter usw. umfasst.

11. Mittelkonsolenanordnung (10) nach einem der vorhergehenden Ansprüche,
**dadurch gekennzeichnet, dass** zwischen den Luftkanälen (14, 15) an der unteren Oberfläche des Konstruktionsteils (11) in seiner eingebauten Lage ein vertiefter unterer Aufnahmeraum (17) erzeugt ist, wobei der untere Aufnahmeraum (17) zur Auflage auf einem Mitteltunnel (50) des Fahrzeugs angeordnet ist.

12. Mittelkonsolenanordnung (10) nach einem der vorhergehenden Ansprüche,
**dadurch gekennzeichnet, dass** das Konstruktionsteil (11) mit unteren Befestigungspunkten (31, 32, 33, 34) für die Befestigung in der Instrumententafel, in dem Mitteltunnel und/oder in der Rohkarosserie versehen ist.

13. Mittelkonsolenanordnung (10) nach einem der vorhergehenden Ansprüche,
**dadurch gekennzeichnet, dass** das Konstruktionsteil (11) mit oberen Befestigungspunkten (35, 36, 37, 38, 39, 40) für die Befestigung an der Mittelkonsole (60) versehen ist.

14. Mittelkonsolenanordnung (10) nach einem der vorhergehenden Ansprüche,
**dadurch gekennzeichnet, dass** das Konstruktionsteil (11) aus einem thermoplastischen Material hergestellt ist.

## Revendications

1. Agencement de console centrale (10) dans un véhicule, cet agencement (10) comprenant au moins un conduit (14, 15) pour la distribution de l'air et une partie structurelle (11) pour absorber les forces, ledit audit moins conduit d'air (14, 15) étant intégré dans la géométrie de la partie structurelle (11) pour absorber les forces,
dans lequel la partie structurelle (11) est composée d'au moins une première partie (12) et une deuxième partie (13), au moins une d'entre elles étant pourvue d'une cavité (26, 27, 28, 29) s'étendant le long de la longueur d'extension de ladite au moins une première (12) et/ou deuxième (13) partie,
**caractérisé en ce que**
la première partie (12) est située dans une position supérieure par rapport au reste de la partie structurelle (11) et la deuxième partie (13) est située dans une position inférieure par rapport au reste de la partie structurelle (11) lorsque la partie structurelle complète (11) est montée sur le véhicule.

2. Agencement de console centrale (10) selon la revendication 1,
**caractérisé en ce que** la première partie (12) et la deuxième partie (13) sont assemblées de manière à ce qu'au moins un conduit d'air (14, 15) soit créé dans la partie structurelle (11), lequel conduit d'air (14, 15) s'étend le long de la longueur d'extension de la partie structurelle (11).

3. Agencement de console centrale (10) selon la revendication 2, **caractérisé en ce qu'**un, deux, trois, quatre conduits d'air tubulaires (14, 15) ou plus sont créés par des cavités semi-tubulaires (26, 27, 28, 29) de la partie structurelle (11) lorsqu'elle est assemblée.

4. Agencement de console centrale (10) selon la revendication 3,
**caractérisé en ce qu'**un conduit d'air (14, 15) est créé à chaque côté longitudinal de l'agencement de console centrale (10).

5. Agencement de console centrale (10) selon l'une quelconque des revendications 2 à 4,
**caractérisé en ce que** la première partie (12) et la deuxième partie (13) sont pourvues de deux cavités séparées semi-tubulaires (26, 27, 28, 29), s'étendant le long de la longueur d'extension de la première (12) et de la deuxième (13) partie, la première et la deuxième partie étant agencées de façon à être combinées pour former la partie structurelle (11), de manière à ce qu'un premier (14) et un deuxième (15) conduit d'air fermés soient créés en fermant les cavités semi-tubulaires (26, 27, 28, 29).

6. Agencement de console centrale (10) selon l'une quelconque des revendications précédentes,
**caractérisé en ce que** la coupe transversale de l'au moins un conduit d'air (14, 15) est rectangulaire.

7. Agencement de console centrale (10) selon l'une quelconque des revendications précédentes,
**caractérisé en ce que** la coupe transversale du conduit d'air (14, 15) varie le long de la longueur d'extension de la partie structurelle (11).

8. Agencement de console centrale (10) selon l'une quelconque des revendications précédentes,
**caractérisé en ce que** le conduit d'air (14, 15) va du système de chauffage, de ventilation et de climatisation jusqu'à au moins une sortie d'air ou une ouverture d'aération (61, 62) pour la rangée de sièges arrière.

9. Agencement de console centrale (10) selon l'une quelconque des revendications précédentes,
**caractérisé en ce qu'**un espace de logement supérieur (16) est formé entre les deux conduits d'air (14, 15) sur la surface supérieure de la partie structurelle (11) dans la position montée de celle-ci,
l'agencement de console centrale (10) comprenant en outre une console centrale (60), disposée dans l'espace de logement supérieur (16).

10. Agencement de console centrale (10) selon la revendication 9,
**caractérisé en ce que** la console centrale comprend le tableau de bord, des modules de changement de vitesse, des cases de logement, des accoudoirs, des porte-gobelets, etc.

11. Agencement de console centrale (10) selon l'une quelconque des revendications précédentes,
**caractérisé en ce qu'**un espace de logement inférieur renfoncé (17) est créé entre les conduits d'air (14, 15) sur la surface inférieure de la partie structurelle (11) dans la position montée de celle-ci, cet espace de logement inférieur (17) étant adapté de façon à reposer sur un tunnel central (50) du véhicule.

12. Agencement de console centrale (10) selon l'une quelconque des revendications précédentes,
**caractérisé en ce que** la partie structurelle (11) est pourvue de points d'attache inférieurs (31, 32, 33, 34) pour l'attacher dans le tableau de bord, le tunnel central et/ou la carrosserie en blanc.

13. Agencement de console centrale (10) selon l'une quelconque des revendications précédentes,
**caractérisé en ce que** la partie structurelle (11) est pourvue de points d'attache supérieurs (35, 36, 37, 38, 39, 40) pour l'attacher à la console centrale (60).

14. Agencement de console centrale (10) selon l'une quelconque des revendications précédentes,
**caractérisé en ce que** la partie structurelle (11) est fabriquée en un matériau thermoplastique.
